# EUROPEAN PATENT APPLICATION

(11) **EP 2 747 018 A1**
(43) Date of publication of application: **25.06.2014**
(21) Application number: 13005854.8
(22) Date of filing: 17.12.2013
(51) Int. Cl.: G06Q 30/00, G06Q 20/00

(54) **Device for payment and automatic change of coins and banknotes**

(30) Priority: 18.12.2012 IT RN20120021
(71) Applicant: Berardi Stelvio, 47922 Rimini (RN) (IT); Tarsina, Alexandru, 47822 Santarcangelo di Romagna (RN) (IT)
(72) Inventor: Berardi Stelvio, 47922 Rimini (RN) (IT); Tarsina, Alexandru, 47822 Santarcangelo di Romagna (RN) (IT)

(57) **Abstract**

This invention relates to a device for accepting cash payments at cash desks of trading concerns and the like.

The device comprises a container (2) which can be installed at the cash desks of trading concerns and the like and which is equipped at least with a first opening (3) for inserting coins (A), leading to a coin box (4) for automatically validating the coins (A), the coin box (4) being connected to a drawer (5) movable on command for automatically collecting the coins (A) inserted into the first opening (3) and, if necessary, automatically delivering coins (A) to a second opening (6) for automatically returning coins (A) as change. The container (2) also comprises a third opening (7) for inserting banknotes (B) and, if necessary for automatically returning banknotes (B) as change and associated with an automatic validating-recycling unit (8) for banknotes (B) and means for connecting the movable drawer (5) and the validating-recycling unit (8) to an external processing unit provided with a control program for checking the payments accepted and the change returned, comprising an algorithm for optimizing at least the quantity of coins (A) inside the container (2) as a function of the change to be dispensed. This processing unit can be associated with a management program for cash desks of trading concerns and the like.

## Description

This invention relates to a device for accepting cash payments at cash desks of trading concerns and the like.

At present, devices to be installed at sales outlets and trading concerns and designed to assist sales assistants, cashiers or other operators in the handling of payments for goods purchased by customers are well known and widely available on the market.

More precisely, in the more advanced systems, these devices comprise a computer terminal equipped with a screen and providing the operator with essential support for payment transactions, providing and managing all the relevant information (for example, after identifying the goods purchased, the terminal displays a summary, inclusive of the total amount payable, thereby simplifying the operator's task).

To be able to do this, the terminal is associated with a hardware structure equipped with a management program and a memory unit: this structure may control different terminals (and may therefore be placed at a remote location) or it may be dedicated to a single terminal (in which case it may be placed in the immediate vicinity). The terminal is also operatively associated with a cash register in which the operator can place the cash (coins or banknotes) given by the customer as payment and/or take out the coins or banknotes to be given to the customer as change, if necessary.

This type of system is not free of disadvantages, however.

Indeed, it should be noted that devices of the type described above are in many cases very cumbersome (in effect, the operator's work station - the cash desk - must be provided at least with the computer terminal, the screen and the cash register) and this may lead to considerable inconvenience, especially in small shops, where the device tends to get in the way of the operator (and/or of customers).

Also, the need to handle cash received as payment or handed out as change is a critical and, at times, stressful task for the operator, who must be on the alert at all times and pay the utmost attention when exchanging cash with the customer in order to avoid mistakes and cash losses. Moreover, managing the cash register personally means opening it often in front of the customer and exposes the operator and the sales outlet to the risk of robbery, receiving counterfeit money, or other fraudulent acts by ill-intentioned persons, especially during busy hours, when the operator is hard put to pay due attention to everything that is going on around him or her.

The main purpose of this invention is to overcome the above mentioned problems by providing a device of limited size capable of offering assistance during payment transactions.

In the context of this purpose, one aim of the invention is to provide a device which allows optimal management of the cash desk, reducing or eliminating the risk or errors and cash losses.

Another aim of the invention is to provide a device which is capable of reducing or eliminating the risk of robbery or other unlawful acts.

A further aim of the invention is to provide a device which guarantees high operating reliability and versatility since it can be used also in association with terminals and programs already used at the sales outlet.

Yet another aim of the invention is to provide a device of limited cost and secure application.

This purpose and these aims are achieved by a device for accepting cash payments for cash desks of trading concerns and the like, characterized in that it comprises a container to be installed at the cash desks of trading concerns and the like and equipped at least with: a first opening for inserting coins, leading to a coin box for automatically validating the coins, the coin box being connected to a drawer movable on command for automatically collecting the coins inserted into the first opening and, if necessary, automatically delivering coins to a second opening for returning coins as change, a third opening for inserting banknotes and, if necessary for returning banknotes as change and associated with an automatic banknote validating-recycling unit, means for connecting the movable drawer and the validating-recycling unit to an external processing unit provided with a control program for checking the payments accepted and the change returned, comprising an algorithm for optimizing at least the quantity of coins inside the container as a function of the change to be dispensed, the processing unit being associable with a management program for cash desks of trading concerns and the like.

Further features and advantages of the invention are more apparent from the non-limiting description of a preferred embodiment of the device according to the invention, illustrated by way of general example in the accompanying drawings, in which:
Figure 1 shows the device according to the invention in a front side perspective view;
Figure 2 shows the device according to the invention in a rear side perspective view;

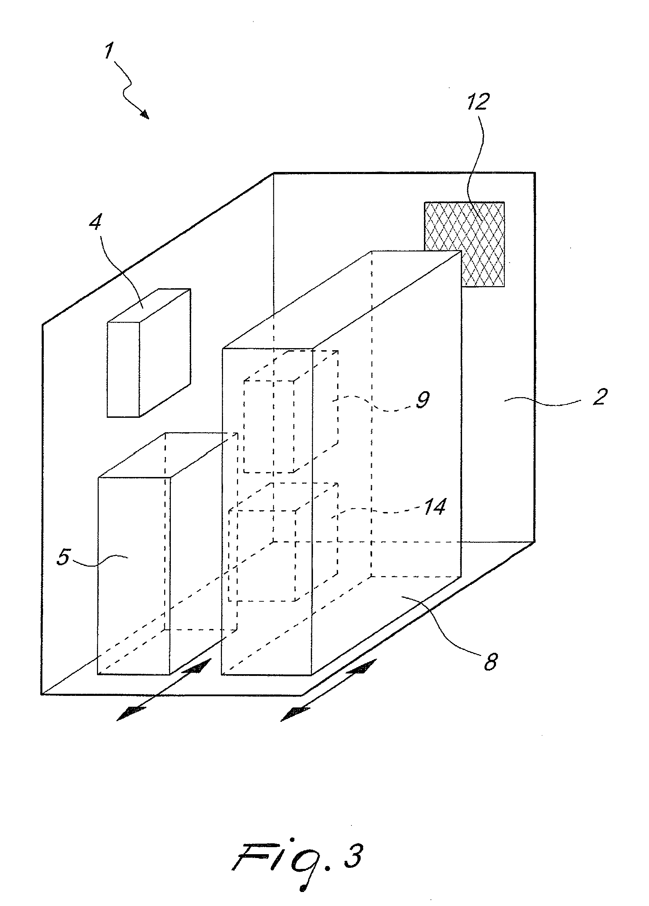

Figure 3 shows the internal components of the device according to the invention in a front side perspective view;
Figure 4 schematically illustrates the use of the device according to the invention.

With reference to the drawings listed above, the reference numeral 1 denotes a device which (as will become more apparent below) is capable of providing effective assistance to the operator (a sales assistant, a cashier or other operator) in the handling of payments at cash desks of trading concerns (of any kind) and the like.

According to the invention, the device 1 comprises a container 2 which can be installed at the cash desks of trading concerns and the like (even in confined spaces, as will become more apparent below) and which is equipped at least with a first opening 3 for inserting coins A and leading to a coin box 4 for automatically validating the coins A.

The coin box 4 is in turn connected to a drawer 5 movable on command (of the type known as "hopper" in the jargon of the trade) capable of automatically collecting the coins A inserted into the first opening 3 and/or, if necessary, delivering other coins to a second opening 6 through which the coins A are automatically returned as change.

The container 2 also has a third opening 7 through which banknotes B can be inserted from the outside or, if necessary, automatically returned (as change).

The third opening 7 is then associated with an automatic validating-recycling unit 8 for banknotes B (so they can be returned, if necessary, and in general, for the management of the banknotes B in the manner described in more detail below).

The container 2 is also equipped with means for connecting the movable drawer 5 and the validating-recycling unit 8 to an external processing unit (for example to a computer or other processor) provided with a control program for checking the payments accepted and the change returned. This control program conveniently comprises an algorithm for optimizing at least the quantity of coins A (and, if necessary, the quantity of banknotes B) inside the container 2 as a function of the change to be dispensed.

This processing unit may then be associated with a management program for cash desks of trading concerns and the like.

It should be noted that the above mentioned control program may be part of the management program or may be a distinct application capable of communicating therewith.

For example, the device 1 might be associated, through connecting means, with a terminal placed at a cash desk of the trading concern under consideration: this terminal, provided with a screen (and, if necessary, with a keyboard for the operator) will in turn be associated with a hardware structure (the processing unit) comprising a suitable management program and a memory unit.

It should also be noticed that the device 1 according to the invention offers the possibility of automatically managing cash payments and the giving of change, which are tasks which can be performed by the operator but, in a more advantageous and practical manner, directly by the customer.

More specifically, the above mentioned connecting means may be of any type, without departing from the scope of protection claimed herein, and may therefore comprise any wired and/or wireless connection and/or communication interface (for example, a LAN interface, a bluetooth interface, a WiFi interface).

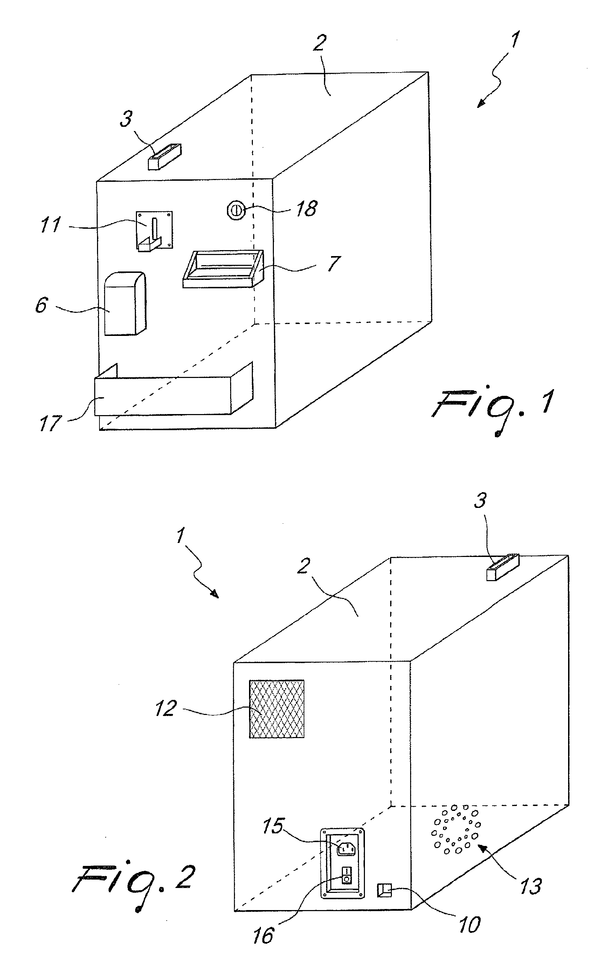

In the preferred embodiment, which is mentioned purely by way of non-limiting example of how the invention might be implemented, the connecting means comprise a USB interface 9 facing a fourth opening 10 which is made on the container 2 (for example, at the back, as may be observed in Figure 2) and which is designed to house a USB port mounted on the container 2 and designed, obviously, to be connected to the USB interface 9. The USB interface 9 is operatively associated with the movable drawer 5 and with the validating-recycling unit 8, so as to allow the processing unit to check and control them through the connection between the USB interface 9 and the USB port. Conveniently, the device 1 also comprises a fifth opening 11, through which rejected coins A can be automatically returned to the outside (for example, if inserted by mistake). Preferably, the device 1 also comprises means for controlling the temperature of its components to guarantee optimum operation. More in detail, these controlling means comprise at least a sixth opening 12, facing a cooling fan, and a plurality 13 of heat exchange holes: both the sixth opening 12 and the plurality 13 of holes are made on respective side walls of the container 2 (to allow cooling of the internal components through the fan and optimum heat exchange through the plurality 13 of holes).

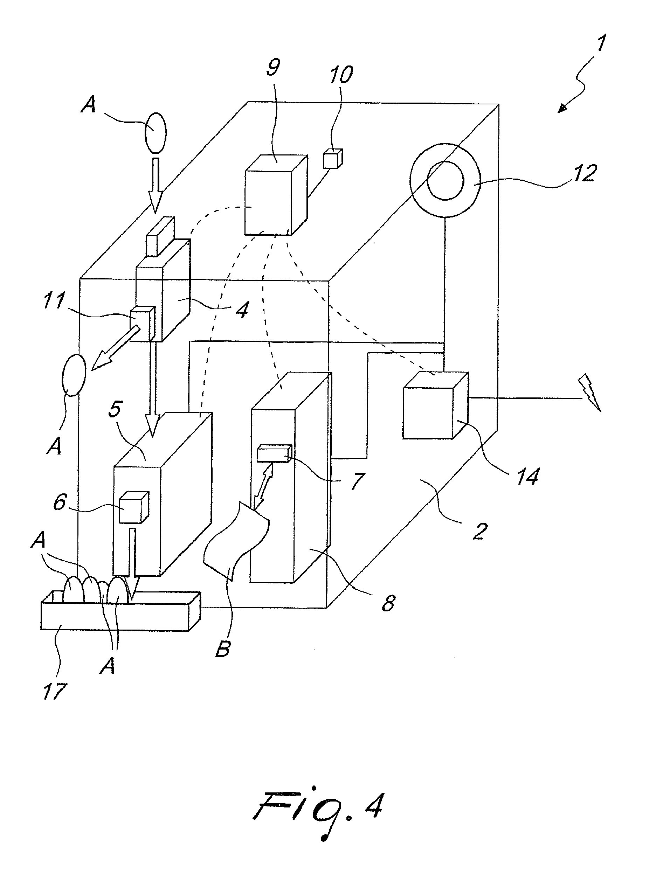

Advantageously, the device 1 also comprises a power supply/transformer unit 14, housed in the container 2 and associable with a respective electrical power socket 15. The power supply/transformer unit 14 (which can be switched on and off using a respective switch 16) is designed to supply electrical power for example (as shown in Figure 4) to the USB interface 9, the fan, the drawer 5 and/or the validating-recycling unit 8 for banknotes B, etc.

It should also be noted that the container 2 can be externally fitted with a tray 17 mounted under the second opening 6 to receive the coins A (as shown in Figure 4, for example) given as change by the device 1 according to the invention.

The container 2 is further provided with a door (if necessary comprising a wall of the container 2) which can be operated by means of a suitable lock 18.

The cash payment method (schematically illustrated in Figure 4) for cash desks of trading concerns and the like comprises first of all placing at the cash desk, in a step a, a container 2 and an external processing unit provided with a control program for checking the payments accepted and the change returned, comprising an algorithm for optimizing at least the quantity of coins inside the container 2 as a function of the change to be dispensed.

Next, the method comprises, in a step b., associating the processing unit with a cash desk management program.

The method further comprises, in a step c., connecting to the processing unit (for example, through connecting means like the USB interface 9, which preferably uses an encrypted communications protocol such as, by way of a non-limiting example, an eSSP protocol) a drawer 5 movable on command for collecting and delivering coins A and an automatic validating/recycling unit 8 for banknotes B, both of which are housed in the container 2.

Thus, when the operator transmits to the terminal the amount payable or the code of the articles selected by the customer (using the keyboard, or the screen if it is a touch-screen, or scanners of various kinds), the device 1 prepares to accept and receive the related payment.

The method then comprises, in a step d, inserting coins A into a first opening 3 of the container 2 and/or banknotes B into a third opening 7 of the container 2 until reaching an amount greater than or equal to the total amount payable for the goods purchased.

It should be noted that step d. can be performed by the operator but (thanks to the automated system which accompanies each step) it can advantageously be performed directly by the customer, thereby facilitating and speeding up the work to be done by the operator (sales assistant, cashier, bartender, etc).

Whatever the case, in step e., the method comprises automatically validating the coins A in a coin box 4 housed in the container 2 and the banknotes B in an automatic unit 8 (in this step, thanks precisely to the coin box 4 and the unit 8). Next, the method comprises automatically collecting the validated coins A in a drawer 5 connected to the coin box 4 and then, if necessary, in a step g., automatically returning coins A and/or banknotes B as change through a second opening 6 of the container 2 and through the third opening 7, respectively.

It should be noted that the amount of cash inserted is recognized and counted by the coin box 4, which transfers the coins A to the drawer 5, and by the unit 8: the relevant information is transmitted through the USB interface 9, to the control program (and/or to the management program) so that it can decide whether or not change must be given (in step g.). After completing payment (and having given change), the device 1 may be configured to automatically send a command for printing a receipt.

As mentioned above, the control program comprises an algorithm for optimizing at least the quantity of coins A (and, if necessary, the quantity of banknotes B) inside the container 2 as a function of the change to be dispensed. Thus, in each case, the control program can calculate the combination which minimizes the number of coins A (and, where applicable, of banknotes B) remaining inside the container 2.

It is thus possible to considerably reduce the size of the device 1 (and in particular of the container 2) because the control program keeps the quantity of coins inside A inside the device 1 down to a minimum, thereby eliminating the need for additional compartments to hold excess coins A (as is the case with cash payment desks of known type).

Consequently, the height (and more generally, the overall dimensions) of the device 1 is relatively limited so that it can be placed on cash payment desks of any kind and size and even where available space is minimal (on a bar counter for example).

The functions of accepting and recognizing the cash inserted, and of giving change, are fully automatic (as described above) and the device 1 thus avoids cash handling problems, eliminating cash balance differences and losses and guaranteeing precision in the receiving of payments and giving of change, and also checking (validating) the coins A and the banknotes B to identify counterfeit money.

The operation of the device 1 as described above makes cash thefts or fraudulent acts practically impossible, even where direct supervision by the proprietor of the trading concern is not possible. Furthermore, thanks to the simple connection through a USB interface 9, the device 1 can be connected to terminals and computers already present in the sales outlet, so that all that needs to be done is load the control program into the management program, if any, already in operation and making the suitable links.

In this version, therefore, the device 1 proves to be a useful accessory which can be installed at any time to improve and optimize the activities and management of an existing cash desk.

In practice, it has been found that the device according to the invention fully achieves its purpose thanks to a first opening leading into a coin box which is in turn connected to a drawer movable on command, a third opening associated with a banknote validating-recycling unit, means for connecting the movable drawer and the validating-recycling unit to a processing unit provided with a control program for checking the payments accepted and the change returned and comprising an optimizing algorithm, all of which make it possible to provide a device of limited overall dimensions and capable of offering assistance during cash payment activities.

The invention described can be modified and adapted in several ways without thereby departing from the scope of the inventive concept. Also, all the details of the invention may be substituted for technically equivalent elements.

In the examples given herein, individual features described in connection with specific embodiments may be interchanged with other, different features forming part of other embodiments.

In practice, all of the materials used, as well as the dimensions, may vary according to requirements and the state of the art.

## Claims

1. An accessory device for accepting cash payments and automatically giving change, **characterized in that** it does not have a compartment for collecting excess coins, consequently allowing saving of space.

2. The accessory device for accepting cash payments and automatically giving change according to claim 1, **characterized in that** it can be placed on a sales counter thanks to its greatly reduced overall dimensions.

3. The accessory device for accepting cash payments and automatically giving change according to claims 1 and 2, **characterized in that** it can substitute the cash drawer at cash desks.

4. The accessory device for accepting cash payments and automatically giving change according to claims 2 and 3, **characterized in that** it can be interfaced with a multiplicity of management programs for cash desks.

5. A system for accepting cash payments and automatically giving change, **characterized in that** it eliminates manual cash handling by the salesperson, thereby avoiding possible errors or fraudulent acts.

6. A device for accepting cash payments for cash desks of trading concerns and the like, **characterized in that** it comprises a container (2) to be installed at the cash desks of trading concerns and the like and equipped at least with:
- a first opening (3) for inserting coins (A), leading to a coin box (4) for automatically validating the coins (A), the coin box (4) being connected to a drawer (5) movable on command for automatically collecting the coins (A) inserted into the first opening (3) and, if necessary, automatically delivering coins (A) to a second opening (6) for automatically returning coins (A) as change,
- a third opening (7) for inserting banknotes (B) and, if necessary for returning banknotes (B) as change and associated with an automatic validating-recycling unit, (8) for banknotes (B),
- means for connecting the movable drawer (5) and the validating-recycling unit (8) to an external processing unit provided with a control program for checking the payments accepted and the change returned, comprising an algorithm for optimizing at least the quantity of coins (A) inside the container (2) as a function of the change to be dispensed, the processing unit being associable with a management program for cash desks of trading concerns and the like.

7. The device according to claim 1, **characterized in that** the connecting means comprise a USB interface (9) facing a fourth opening (10) which is made on the container (2) and which is designed to house a USB port, the USB interface (9) being operatively associated with the movable drawer (5) and with the validating-recycling unit (8).

8. The device according to one or more of the preceding claims, **characterized in that** it comprises a fifth opening (11) for automatically returning rejected coins (A).

9. The device according to one or more of the preceding claims, **characterized in that** it comprises temperature controlling means.

10. The device according to one or more of the preceding claims, **characterized in that** the controlling means comprise at least a sixth opening (12), facing a cooling fan, and a plurality (13) of heat exchange holes, the sixth opening (12) and the plurality (13) of holes being made on respective side walls of the container (2).

11. The device according to one or more of the preceding claims, **characterized in that** it comprises a power supply/transformer unit (14) associable with a respective electrical power socket (15) and housed in the container (2), for supplying electrical power.

12. The device according to one or more of the preceding claims, **characterized in that** the container (2) is provided with a door which can be operated by means of a suitable lock (18).

13. A cash payment method for cash desks of trading concerns and the like, **characterized in that** it comprises the steps of:
a. placing at the cash desk of trading concerns and the like a container (2) and an external processing unit provided with a control program for checking the payments accepted and the change returned, comprising an algorithm for optimizing at least the quantity of coins (A) inside the container (2) as a function of the change to be dispensed;
b. associating the processing unit with a cash desk management program;
c. connecting to the processing unit a drawer (5) movable on command for collecting and delivering coins (A) and an automatic validating/recycling unit (8) for banknotes (B), both of which are housed in the container (2);
d. inserting coins (A) into a first opening (3) of the container (2) and/or banknotes (B) into a third opening (7) of the container (2) until reaching at least an amount corresponding to the total amount payable for the goods purchased;
e. automatically validating the coins (A) in a coin box (4) housed in the container (2) and the banknotes (B) in the automatic unit (8);
f. automatically collecting the validated coins (A) in the drawer (5) connected to the coin box (4);
g. automatically returning coins (A) and/or banknotes (B) as change through a second opening (6) of the container (2) and through the third opening (7), respectively.
